# DEMANDE DE BREVET EUROPEEN

(11) **EP 3 075 279 A1**
(43) Date de publication de la demande: **05.10.2016**
(21) Numéro de dépôt: 15305491.1
(22) Date de dépôt: 02.04.2015
(51) Int. Cl.: A45C 7/00

(54) **SAC DE TRANSPORT POUR MOTOCYCLE**

(71) Demandeur: Softcase, 75019 Paris (FR)
(72) Inventeur: Haddad, David, 75019 Paris (FR); Schwartzmann, Stephan Charles, 92300 Levallois-Perret (FR)
(74) Mandataire: Casalonga

(57) **Abrégé**

Sac de transport pour motocycle, comprenant un fond (4), une enveloppe (2) s'étendant à partir du fond (4) et formant avec ce dernier un volume de chargement (3) et comprenant des lignes de pliage délimitant des volets (20) dans ladite enveloppe (2).

Les volets (20) sont pourvus de plaques de renfort (21).

## Description

La présente invention concerne, de manière générale, les accessoires pour motocycle et se rapporte plus particulièrement à un sac de transport.

Un tel sac est destiné à être utilisé pour le transport de marchandises diverses, pouvant être disposées en vrac, dans un volume de chargement prévu à cet effet.

Pour répondre au besoin de stockage d'articles, en vue de leur transport, on connaît jusqu'ici des dispositifs, désignés généralement par le terme de « top case », fixés à l'arrière de la selle, sur un support existant ou rajouté dans ce but.

Ces moyens de chargement possèdent de nombreux inconvénients. En effet, ces dispositifs ne sont généralement pas destinés à être amovibles. De plus, ils ne disposent pas de moyens de préhension adéquats, de sorte que même s'ils sont retirés de leur support, leur transport n'est pas facilité. Le top case est en outre un dispositif dont l'encombrement, le poids et la rigidité viennent à leur tour limiter l'aisance que peut avoir le conducteur à le transporter.

Ainsi, le top case est généralement laissé en permanence sur son support, ce qui augmente les risques de vol ou d'effraction.

Une autre approche de stockage consiste à tirer profit de l'espace disponible à l'intérieur de la selle du motocycle. Cependant, cet espace offre un volume de chargement réduit, imposé par la forme et la localisation du compartiment. Bien que cela puisse être avantageux pour certains usages, un inconvénient reste le caractère inamovible de l'espace de stockage. Il constitue uniquement un espace de rangement, inadapté au transport des articles hors du motocycle.

L'invention a donc pour but de remédier aux différents inconvénients énumérés ci-dessus et de proposer un sac léger, compact mais de grande contenance.

Il est donc proposé un sac de transport pour motocycle, comprenant un fond, une enveloppe s'étendant à partir du fond et formant avec ce dernier un volume de chargement et comprenant des lignes de pliage délimitant des volets dans ladite enveloppe.

En outre, les volets sont pourvus de plaques de renfort.

Ces plaques confèrent une rigidité et donc une tenue au sac en prévenant notamment son affaissement. Par conséquent, tout type de marchandises peut être transporté, également les plus fragiles. Le caractère pratique du sac n'en est pour autant pas altéré.

Elles facilitent en outre le pliage du sac.

Aussi, le fond est pourvu d'au moins une ligne de pliage.

Selon un autre mode de réalisation du sac, l'enveloppe est pourvue d'au moins deux lignes de pliage transversales et d'une ligne de pliage longitudinale sur deux faces latérales mutuellement opposées du sac et d'au moins deux lignes de pliage transversales sur deux autres faces latérales mutuellement opposées.

Avantageusement, les plaques de renfort sont aimantées.

Par ailleurs, le sac est pourvu d'un ensemble d'au moins une sangle principale de fixation du sac sur un support, et des moyens de maintien amovible du sac sur la sangle principale.

On pourra prévoir que les moyens de maintien amovible comprennent au moins une sangle liée, par une extrémité, à une extrémité libre du sac et comprennent à leur extrémité opposée un élément de fixation apte à coopérer avec un élément de fixation complémentaire prévu sur la sangle principale.

En outre, la sangle principale comporte au moins deux sangles de maintien prévues latéralement sur la sangle principale et aptes à coopérer avec deux sangles complémentaires prévues sur le sac.

Avantageusement, le fond est fixé à un boîtier.

Selon une autre caractéristique, le boîtier comporte un moyen de fermeture. Ce moyen de fermeture comprend par exemple une fermeture à glissière.

On pourra aussi prévoir que le sac comprenne une housse de protection de forme apte à recouvrir l'enveloppe lorsqu'elle est dépliée.

L'invention concerne également une selle incorporant un sac de transport tel que défini précédemment.

D'autres buts, avantages et caractéristiques ressortiront de la description qui va suivre, donnée à titre d'exemple purement illustratif et faite en référence aux dessins annexés sur lesquels :
- La figure 1 est une vue en perspective d'un sac conforme à l'invention, en position dépliée ;
- La figure 2 représente une vue d'ensemble du sac de la figure 1, en position fermée ;
- La figure 3 est une vue en perspective de l'enveloppe du sac selon un mode de réalisation selon l'invention ;
- Les figures 4a et 4b montrent l'utilisation d'un sac selon un mode de réalisation de l'invention de la figure 1 ; et
- La figure 5 est une vue de profil d'une partie arrière d'un scooter dont la selle incorpore un sac selon l'invention.

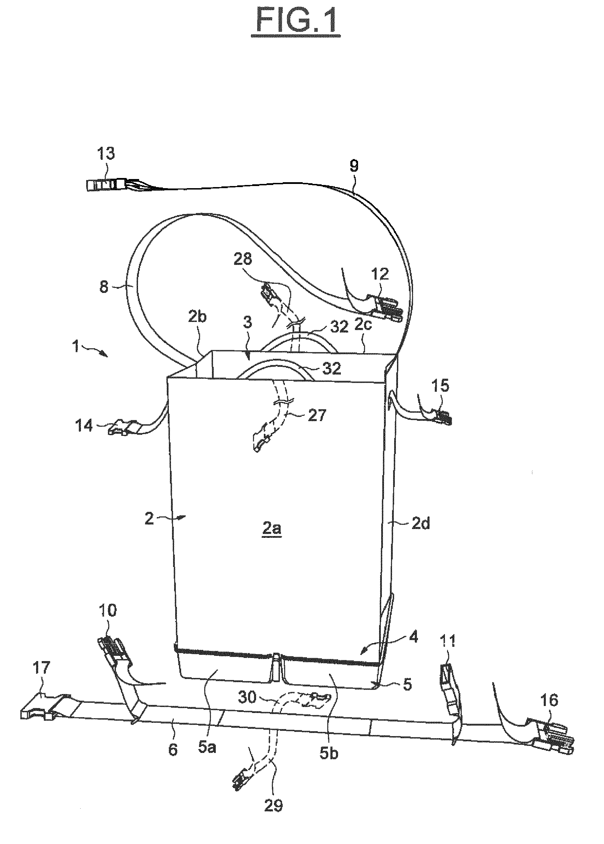

On se référera tout d'abord à la figure 1, qui illustre un sac pour motocycle conforme à l'invention, désigné par la référence numérique générale 1.

Ce sac 1 est destiné à venir se monter, à la demande, sur la partie arrière d'un motocycle, tel qu'un scooter, pour former un espace de chargement pour le transport de divers types d'objets.

Le sac 1 comprend essentiellement une enveloppe 2 comprenant ici quatre côtés latéraux 2a, 2b, 2c, et 2d, une extrémité supérieure ouverte 3 et un fond 4 solidaire d'un boîtier 5 comprenant deux parties 5a et 5b reliées par une charnière. L'enveloppe 2 est, par exemple, en tissu alors que le boîtier 5 est, par exemple, en polyuréthane.

Il comporte en outre une sangle principale 6 destinée au montage amovible du sac 1 sur la selle du motocycle et des moyens de maintien amovible 8, 9, 10 et 11 du sac sur ladite sangle 6.

La sangle principale 6 est destinée à venir se fixer sur la selle par l'intermédiaire d'éléments complémentaires de fixation amovible, mâle 16 et femelle 17, venant coopérer l'un avec l'autre, constitués ici de boucles d'attache rapide.

Les moyens de maintien comprennent notamment un ensemble de sangles secondaires dotées d'éléments de fixation amovible constitués également par des boucles d'attache rapide.

Le sac 1 comprend en effet deux sangles secondaires 8 et 9, par exemple de longueur réglable, respectivement fixées sur les extrémités libres des cotés latéraux 2b et 2d, en état décalées l'une par rapport à l'autre, et terminées par des boucles d'attache rapide 12 et 13, ainsi que deux sangles secondaires 10 et 11 équipées de boucles d'attache rapide et fixées à la sangle principale 6 de part et d'autre de la zone de réception de l'enveloppe.

La boucle 12 de la sangle secondaire 8 est destinée à coopérer avec la boucle de la sangle 11 opposée de la sangle principale 6. De même, la boucle 13 de la sangle secondaire 9 est destinée à coopérer avec la boucle de la sangle 10 de la sangle principale 6.

Sur les faces 2b et 2d sont également fixés deux éléments de fixation mâle 14 et femelle 15, en l'espèce deux boucles d'attache rapide, destinés au transport du sac hors du motocycle. La boucle 13 de la sangle secondaire 9 est en effet destinée à coopérer avec la boucle opposée 14 et la boucle 12 de la sangle secondaire 8 est destinée à coopérer avec la boucle opposée 15.

Les moyens de maintien peuvent être complétés par deux sangles additionnelles 27 et 28 illustrées en pointillés prévues sur l'extrémité libre des côtés 2a et 2c et coopérant au moyen de boucles d'attache rapide avec deux sangles 29 et 30 prévues latéralement sur la sangle 6.

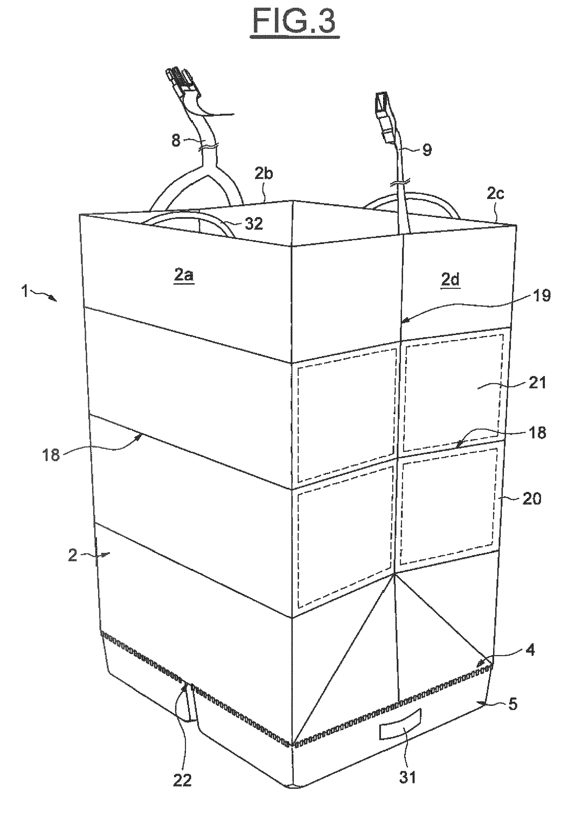

Comme illustré en figure 3, sur chacune des faces 2a, 2b, 2c et 2d du sac 1, l'enveloppe 2 comporte des lignes de pliage transversales 18.

Les deux faces opposées 2b et 2d comportent aussi une ligne de pliage longitudinale 19.

Ces lignes de pliage transversales 18 et longitudinales 19 délimitent des volets 20 sur les faces du sac 1. Les volets 20 sont pourvus de plaques de renfort 21. Il peut s'agir de plaques de carton intégrées par collage à l'enveloppe ou insérées dans des poches de l'enveloppe cousues ou collées. Toutefois, on prévoira avantageusement des plaques de renfort aimantées pour faciliter le pliage de l'enveloppe.

En outre, le fond 4 comporte une ligne de pliage 22 qui coïncide avec la charnière du boîtier 5.

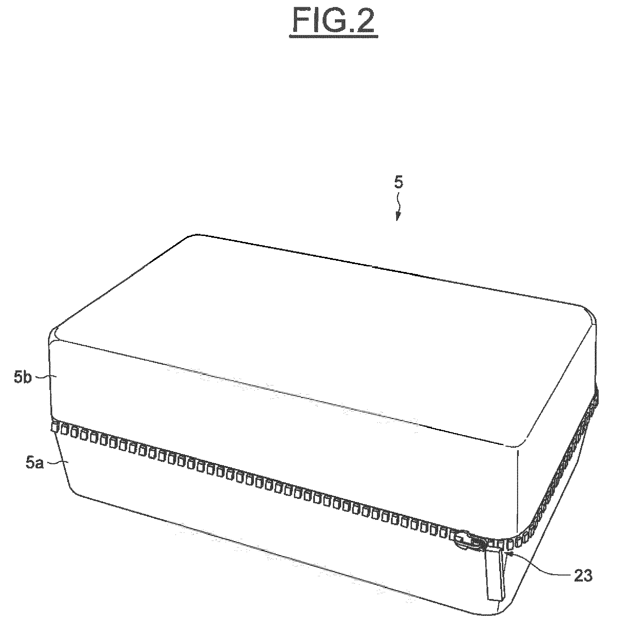

Le sac 1 peut ainsi adopter une configuration dépliée, visible par exemple sur la figure 3, et une position repliée, visible sur la figure 2, dans laquelle l'enveloppe vient se ranger à l'intérieur du boîtier 5. Un moyen de fermeture 23, par exemple une fermeture à glissière, assure le maintien des parties 5a et 5b en vis-à-vis et donc du sac 1 en position fermée.

Comme le montre la figure 3, l'agencement des sangles secondaires n'est pas limité à celui qui est illustré à la figure 1.

En effet, alors que dans le mode de réalisation de la figure 1 les sangles 8 et 9 sont décalées, pour améliorer la stabilité du sac d'avant en arrière, on pourra agencer les sangles 8 et 9 de manière qu'elles soient alignées chacune avec la sangle de pliage 19.

Par ailleurs, pour garantir la stabilité, on pourra également prévoir, sur le boîtier, des passants 31 destinés à recevoir les sangles secondaires 8 et 9.

Avantageusement, on prévoira en outre des poignées, telles que 32, visibles sur les figures 1 et 3, pour faciliter le transport du sac, lorsqu'il a été détaché de la sangle.

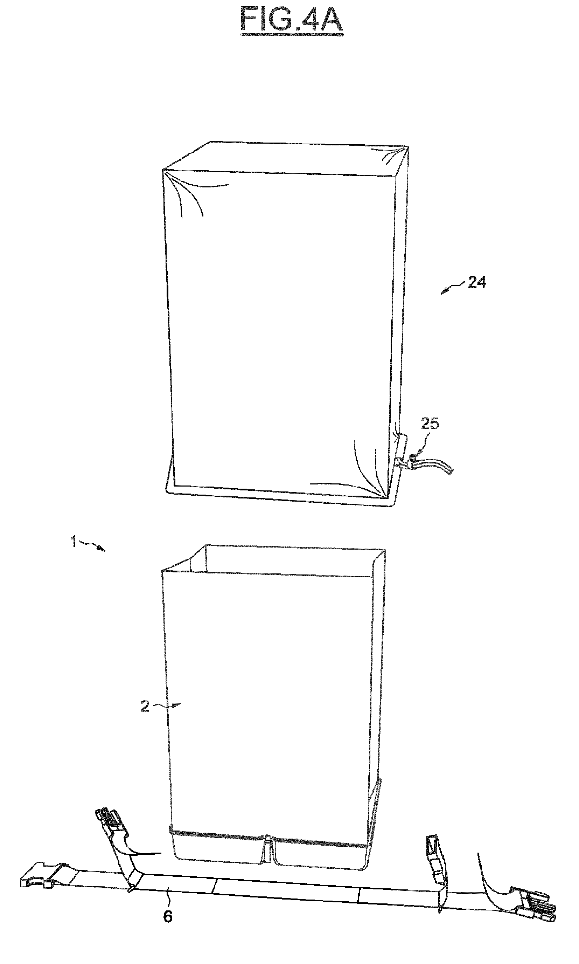

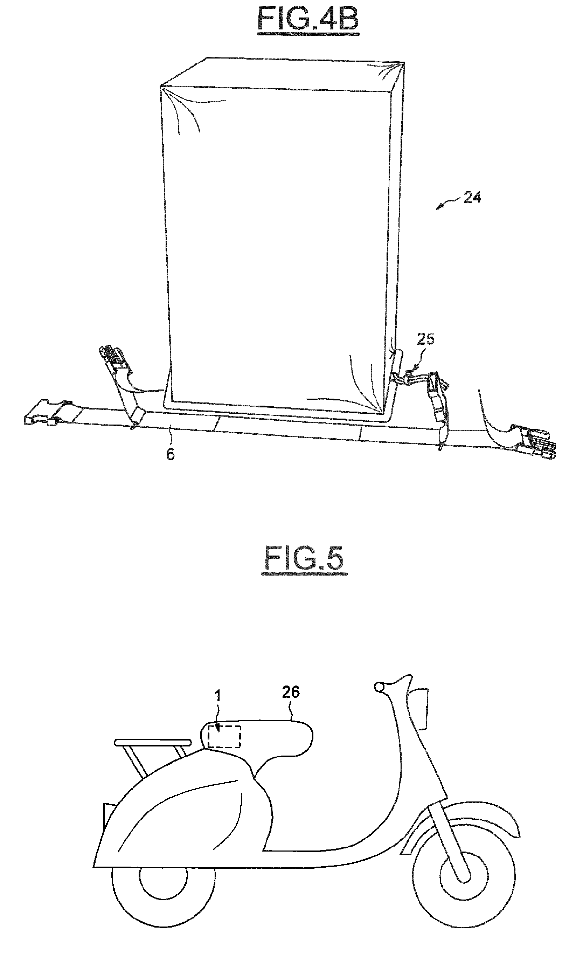

Comme on peut le voir sur les figures 4a et 4b, sur lesquelles les sangles de l'enveloppe ont été omises par soucis de clarté, le sac 1 comprend encore une housse de protection 24 optionnelle destinée à recouvrir l'enveloppe 2 lorsque celle-ci est dépliée. Un moyen de serrage 25 assure le maintien de la housse autour de l'enveloppe 2. Ce moyen de serrage 25, de type boucle de serrage, est disposé à l'extrémité libre de la housse 24 et vient se positionner en regard du boîtier 5.

Lorsque le motocycliste déplie le sac 1 et que l'enveloppe 2 est déployée, il peut bénéficier de son volume de chargement 3.

L'ensemble des moyens de maintien 8, 9, 10 et 11 fixe efficacement le sac 1 sur le motocycle de façon amovible. La sangle principale 6 permet l'accrochage du sac 1 sur la selle. La fixation par l'intermédiaire des sangles secondaires 8 et 9 renforce ce premier moyen de maintien et prévient le sac 1 de toute chute sur les côtés du motocycle. Les sangles 29 et 30, disposées sur la sangle principale 6 participent à leur tour au maintien du sac 1 sur son support, et évitent les mouvements du sac 1, notamment dans le sens de conduite ou transversalement. Ces différents moyens de maintien rendent le sac 1 amovible, qui peut par conséquent être aisément retiré du motocycle.

Les plaques de renfort 21, disposées dans les volets 20, augmentent la rigidité du sac et protègent les objets stockés fragiles d'un affaissement du sac ou de chocs.

Le sac qui vient d'être décrit s'utilise da la façon suivante.

A partir de la position repliée, visible sur la figure 2, il suffit simplement d'ouvrir le boîtier 5, de fixer la sangle principale autour de la selle et de fixer le fond du boîtier sur la sangle 6.

Il convient alors simplement de déplier l'enveloppe pour former le volume de chargement.

Après remplissage, l'enveloppe est sécurisée sur la selle à l'aide des sangles 8 et 9 qui viennent s'encliqueter sur les sangles 10 et 11 de la sangle principale et la housse de protection est éventuellement placée sur l'enveloppe.

Après transport, l'enveloppe peut aisément être transportée, par exemple en bandoulière, grâce aux sangles secondaires 8 et 9 qui viennent se fixer sur les boucles 14 et 15, ou à l'aide des poignées 32.

Après utilisation, le sac 1 est replié autour des lignes de pliage transversales 18 et longitudinales 19 de l'enveloppe 2 qui guident et facilitent son pliage, et l'enveloppe pliée est rangée dans le boîtier qui est ensuite refermé pour former un volume réduit.

On notera que l'aimantation des plaques de renfort 21 facilite le repliement de l'enveloppe 2 dans le boîtier 5 et la maintient repliée.

Par ailleurs, selon un autre mode de réalisation de l'invention, illustré à la figure 5, le sac 1 peut être directement incorporé à la selle 26 d'un motocycle.

Selon cette variante, la selle 26 peut comporter un logement dans lequel est placée une enveloppe similaire à celle décrite précédemment fixée au fond du logement. Un tel logement est avantageusement inaccessible lorsque le sac n'est pas utilisé, en étant par exemple fermé par un volet.

Bien entendu, dans ce mode de réalisation, la sangle principale 6 est omise, dans la mesure où les moyens de maintien amovible associés à la sangle sont prévus sur la selle.

Dans ce mode de réalisation le sac, incorporé à la selle, est donc inamovible.

Une fermeture à glissière peut être ajoutée à l'arrière de la selle afin de permettre l'accès au sac et notamment faciliter le déploiement de l'enveloppe.

## Revendications

1. Sac de transport pour motocycle, comprenant un fond, une enveloppe (2) s'étendant à partir du fond (4) et formant avec ce dernier un volume de chargement (3) et comprenant des lignes de pliage délimitant des volets (20) dans ladite enveloppe (2), **caractérisé en ce que** les volets (20) sont pourvus de plaques de renfort (21).

2. Sac de transport selon la revendication 1, **caractérisé en ce que** le fond (4) est pourvu d'au moins une ligne de pliage (22).

3. Sac de transport selon l'une des revendications 1 et 2, **caractérisé en ce que** l'enveloppe (2) est pourvue d'au moins deux lignes de pliage transversales (18) et d'une ligne de pliage longitudinale (19) sur deux faces latérales mutuellement opposées du sac et d'au moins deux lignes de pliage transversales sur deux autres faces latérales mutuellement opposées.

4. Sac de transport selon l'une quelconque des revendications précédentes, **caractérisé en ce que** les plaques de renfort (21) sont aimantées.

5. Sac de transport selon l'une quelconque des revendications précédentes, **caractérisé en ce que** le sac (1) est pourvu d'un ensemble d'au moins une sangle principale (6) de fixation du sac sur un support, et des moyens de maintien amovible (8, 9, 10, 11) du sac sur la sangle principale (6).

6. Sac de transport selon la revendication 5, **caractérisé en ce que** les moyens de maintien amovible (8, 9, 10, 11) comprennent au moins une sangle (8, 9) liée par une extrémité à une extrémité libre du sac (1) et comprennent à leur extrémité opposée un élément de fixation (12, 13) apte à coopérer avec un élément de fixation complémentaire (11, 10) prévu sur la sangle principale (6).

7. Sac de transport selon la revendication 6, **caractérisé en ce que** la sangle principale comporte au moins deux sangles de maintien (27, 28) pourvues latéralement sur la sangle principale (6) et aptes à coopérer avec deux sangles complémentaires (29, 30) pourvues sur le sac (1).

8. Sac de transport selon l'une quelconque des revendications précédentes, **caractérisé en ce que** le fond (4) est fixé à un boîtier (5).

9. Sac de transport selon l'une quelconque des revendications 6 à 8, **caractérisé en ce que** le boîtier (5) comporte un moyen de fermeture (23).

10. Sac de transport selon l'une quelconque des revendications 1 à 9, comprenant en outre une housse de protection (24) de forme apte à recouvrir l'enveloppe (2) lorsqu'elle est dépliée.

11. Selle de motocycle (26), **caractérisée en ce qu'**elle incorpore un sac (1) selon l'une quelconque des revendications 1 à 10.
